# EUROPÄISCHE PATENTSCHRIFT

(11) **EP 1 377 037 B1**
(45) Veröffentlichungstag und Bekanntmachung des Hinweises auf die Patenterteilung: **06.10.2004**
(21) Anmeldenummer: 03004779.9
(22) Anmeldetag: 05.03.2003
(51) Int. Cl.: H04N 5/225, G02B 23/12, G02B 17/02

(54) **Optisches System mit umschaltbaren Gesichtsfeldern**
Optical system with switchable fields of view
Système optique avec champs de vision commutables

(30) Priorität: 19.06.2002 DE 10227480
(43) Veröffentlichungstag der Anmeldung: 02.01.2004
(73) Patentinhaber: Bodenseewerk Gerätetechnik GmbH, 88662 Überlingen (DE)
(72) Erfinder: Krogmann, Dirk, 88662 Überlingen (DE); Tholl, Hans-Dieter, Dr., 88690 Uhldingen (DE)
(74) Vertreter: Weisse, Renate Dr.

(56) Entgegenhaltungen:
- EP-A- 0 029 568
- DE-A- 10 111 465
- DE-A- 19 742 462

## Beschreibung

Die Erfindung betrifft ein optisches System mit umschaltbaren Gesichtsfeldern, wobei jedem Gesichtsfeld eine Eintrittspupille zugeordnet ist.

Dabei kann ein Gesichtsfeld einen relativ großen Raumwinkel erfassen, um z.B. ein irgendwo innerhalb des großen Raumwinkels befindliches Objekt aufzufassen. Ein zweites Gesichtsfeld kann einen kleinen Raumwinkel mit stärkerer Vergrößerung beobachten, um z.B. das Objekt zu erkennen. Ein optisches System mit umschaltbaren Gesichtsfeldern dieser Art kombiniert gewissermaßen Weitwinkel- und Teleobjektiv.

Ein bekanntes optisches System dieser Art (EP 0 883 010 A2) verwendet ein Cassegrainsystem. Das ist ein optisches System mit einem dem Objekt zugewandten ringförmigen Hohlspiegel als Primärspiegel und einen dem Hohlspiegel zugewandten, konvexen Sekundärspiegel Hohlspiegel und Sekundärspiegel sind gleichachsig zu einer optischen Achse. Auf den Hohlspiegel treffende Strahlen werden konvergierend auf den Sekundärspiegel geleitet. Der Strahlengang geht dann durch die zentrale Öffnung des Hohlspiegels. Um zwischen verschiedenen Gesichtsfeldern umschalten zu können, ist bei der Anordnung nach EP 0 883 010 A2 ein zweiter ringförmiger Hohlspiegel vorgesehen, der zwischen zwei Stellungen axial verschiebbar ist. In einer Stellung befindet er sich außerhalb des von dem Sekundärspiegel empfangenen Strahlenganges. In einer zweiten Stellung taucht er in den Strahlengang zwischen dem "ersten" ringförmigen Hohlspiegel und dem Sekundärspiegel ein. Dadurch wird dieser Strahlengang unterbrochen und der zweite ringförmige Hohlspiegel wird wirksam. Das ist eine recht aufwendige Konstruktion mit um große Stellwege beweglichen makroskopischen Teilen. Es muß ein wesentliches optisches Glied des Systems bewegt und in seiner Wirkstellung genau positioniert werden. Die Umschaltung kann infolge der Trägheit der zu bewegenden Massen nur langsam erfolgen

Durch die DE 197 42 462 A1 (US 60 05 721 A) ist ein optisches System mit umschaltbarem Gesichtsfeld bekannt, bei welchem vor der Eintrittspupille eines abbildenden Objektivs eine durchsichtige, flache, vierseitige Pyramide angeordnet ist. Diese Pyramide wirkt als Strahlenablenkelement. Die Eintrittspupille wird in vier verschiedene Bereiche unterteilt. Die durch diese Bereiche hindurchtretenden Strahlen kommen aus unterschiedlichen Gesichtsfeldbereichen. In einer Zwischenbildebene werden die Bilder dieser Gesichtsfeldbereiche überlagert. Allerdings bilden die Abbildungsstrahlengänge, in denen die Abbildung der Gesichtsfeldbereiche erfolgt, unterschiedliche Winkel mit der optischen Achse des Objektivs. In der Zwischenbildebene ist ein mikroskopisch verstellbares Mikroprismen- oder Mikrolinsenraster angeordnet, welches nacheinander die unter verschiedenen Winkeln auftreffenden Strahlengänge auf ein zweites Objektiv leiten,

Die DE 197 42 462 A1 (US 60 05 721 A) schlägt auch vor, in den verschiedenen Bereichen der Aperturblende unterschiedliche, längsgeschnittene optische Systeme vorzusehen, deren in der Zwischenbildebene überlagerten Bilder in der beschriebenen Weise getrennt werden können. Auf diese Weise können in einem optischen System Weitwinkel- und Teleobjektivfunktionen kombiniert werden.

Die Trennung der Gesichtsfeldbilder beruht bei der DE 197 42 462 A1 (US 60 05 721 A) auf der Ausnutzung der unterschiedlichen Einfallswinkel, unter denen die Abbildungsstrahlengänge auf die Zwischenbildebene treffen.

Der Erfindung liegt die Aufgabe zugrunde, ein optisches System mit schnell umschaltbarem Gesichtsfeld zu schaffen.

Erfindungsgemäß wird diese Aufgabe gelöst durch optische Mittel zur Erzeugung überlagerter Zwischenbilder der Gesichtsfelder in einer Zwischenbildebene, ein Mikrofeldlinsenraster in der Zwischenbildebene, durch welches ein Raster von Mikrobildern der Eintrittspupillen in einer Pupillenbildebene erzeugbar ist, eine Mikroblendenanordnung im wesentlichen in der Pupillenbildebene, durch welche wahlweise jeweils nur eines der Pupillenbilder freigebbar ist, und optische Mittel zur Abbildung der Zwischenbildebene in einer Bildebene.

Bei der Erfindung werden zunächst in einer Zwischenbildebene überlagerte Gesichtsfeldbilder erzeugt ähnlich wie bei der DE 197 42 462 A1 (US 60 05 721 A). In dieser Zwischenbildebene ist ein Mikrofeldlinsenraster vorgesehen. Dieses Mikrofeldlinsenraster ist stationär. Es wird im Gegensatz zum Stand der Technik nach der vorgenannten Druckschrift nicht zum Umschalten zwischen verschiedenen Gesichtsfeldern bewegt. Vielmehr wird durch das Mikrofeldlinsenraster in einer Pupillenbildebene ein Raster von Mikrobildern der Eintrittspupillen erzeugt. In dieser Pupillenbildebene ist nun eine -verstellbare- Mikroblendenanordnung vorgesehen, durch welche jeweils eines der Pupillenbilder freigegeben wird und das andere oder die anderen Pupillenbilder abgedeckt werden. Die Mikroblendenanordnung bildet Austrittspupillen des optischen Systems. Wenn ein Gesichtsfeldbild in der Zwischenbildebene durch Strahlen erzeugt wird, die durch eine zugehörige Eintrittspupille hindurchtreten, dann wird dieses Gesichtsfeldbild im weiteren Strahlengang eliminiert, wenn das Bild der Eintrittspupille abgedeckt wird. Dann erzeugen nur diejenigen Strahlen ein Bild in der Bildebene des Systems, die durch eine Eintrittspupille verlaufen, deren Bild in der Zwischenbildebene nicht abgedeckt ist. Die Umschaltung der Mikroblendenanordnung erfordert nur sehr geringe Stellwege, die z.B. durch Piezosteller erzeugt werden können.

Vorzugsweise ist die Mikroblendenanordnung in der Brennebene des Mikrofeldlinsenrasters angeordnet. Dann wird der Strahlengang objektseitig telezentrisch.

Bei einem bevorzugten Ausführungsbeispiel der Erfindung enthält das optische System ein Cassegrain-System mit einem ringförmigen Hohlspiegel als Primärspiegel und einem dem Hohlspiegel zugewandten konvexen Sekundärspiegel. Dabei wird einfallende Strahlung über den Hohlspiegel auf die Randbereiche des Sekundärspiegels geleitet und von diesem durch eine zentrale Öffnung des Hohlspiegels hindurch reflektiert. Der Hohlspiegel bildet eine erste Eintrittspupille. Der zentrale Bereich des Sekundärspiegels ist durchlässig und bildet eine zweite Eintrittspupille. Das optische System enthält weiterhin ein erstes Objektiv, welches in einer Zwischenbildebene überlagert einmal ein Bild eines ersten Gesichtsfelds mittels der durch den zentralen Bereich des Sekundärspiegels einfallenden Strahlung und zum anderen zusammen mit dem Cassegrainsystem mittels der von dem Cassegrainsystem erfaßten Strahlung ein Bild eines zweiten Gesichtsfeldes erzeugt.

Ein solches optisches System beruht im Grundaufbau auf einem Cassegrainsystem. Die makroskopischen optischen Glieder sind rotationssymmetrisch in bezug auf die optische Achse.

Vorteilhafterweise weist die Mikroblendenanordnung zum wahlweisen Freigeben nur eines der Pupillenbilder eine Mehrzahl von gegeneinander verschiebbaren Blendenrastem auf. Das kann bei dem vorerwähnten Cassegrainsystem in folgender Weise geschehen: Die Mikroblendenanordnung weist drei kongruente Blendenraster von gleichmäßig quadratischen Feldern auf, von denen jede zweite Zeile und jede zweite Spalte durchlässig und die dazwischen liegenden Felder undurchlässig sind. Das ist ein Muster, wo jedes undurchlässige Feld ringsherum von insgesamt acht durchlässigen Feldern umgeben ist. In einer ersten Stellung sind alle drei Blendenraster in Deckung, wobei die undurchlässigen Felder jeweils die Bilder der zweiten Eintrittspupille abdecken. In zweiten Stellungen ist ein erstens Blendenraster um die Kantenlänge eines Feldes in einer ersten, zu Kanten der Felder parallelen Richtung ein zweites Blendenraster um die Kantenlänge eines Feldes in einer zu der ersten Richtung senkrechten zweiten Richtung und ein drittes Blendenraster in einer zur Richtung der Diagonalen der Felder parallelen Richtung um eine der Diagonalen eines Feldes entsprechende Strecke verschoben, wobei die undurchlässigen Felder aller drei Blendenraster jeweils die Bilder der ringförmigen ersten Eintrittspupille abdecken.

In weiterer Ausbildung der Erfindung sind bildseitig von der Pupillenbildebene zwei Mikrolinsenraster angeordnet, deren Mikrolinsen paarweise Teleskope bilden und die Zwischenbildebene auf eine zweite Zwischenbildebene abbilden. In der zweiten Zwischenbildebene ist ein zweites Mikrofeldlinsenraster angeordnet, das einen bildseitig telezentrischen Strahlengang bewirkt. Diese Anordnung gestattet es, die im Bereich der Pupillenbilder stark auseinanderlaufenden Strahlen auf ein zweite Objektiv begrenzter Apertur zu lenken, welches ein Bild der Zwischenbildebene in einer Bildebene erzeugt.

In dieser Bildebene kann beispielsweise ein bildauflösender Detektor angeordnet sein, auf den wahlweise das eine oder das andere Gesichtsfeld abgebildet wird.

Ein Ausführungsbeispiel der Erfindung ist nachstehend unter Bezugnahme auf die zugehörigen Zeichnungen näher erläutert.
- Fig.1: zeigt schematisch ein optisches System auf der Basis eines Cassegrainsystems mit zwei Gesichtsfeldern und einer Anordnung zum Umschalten zwischen diesen Gesichtsfeldern.
- Fig.2: zeigt in vergrößertem Maßstab die Anordnung zum Umschalten zwischen den Gesichtsfeldern bei dem optischen System von Fig. 1.
- Fig.3: zeigt einen Ausschnitt der Pupillenbildebene bei der Anordnung von Fig.2 mit einem Raster von Pupillenbildern, die von einem Mikrofeldlinsenraster erzeugt werden.
- Fig.4: zeigt ein Mikroblendenraster einer Mikroblendenanordnung zum wahlweisen Abdecken der Pupillenbilder jeweils einer Pupille.
- Fig. 5: zeigt eine Konfiguration der Mikroblendenanordnung, bei welcher drei kongruente Mikroblendenraster genau übereinander stehen, so daß die mittleren Pupillenbilder abgedeckt und ringförmige äußere Pupillenbilder freigegeben sind.
- Fig.6: veranschaulicht die Stellbewegung der drei Mikroblendenraster von Fig.4 in die zweite Konfiguration der Mikroblendenanordnung, bei welcher die mittleren Pupillenbilder freigegeben und dafür die äußeren Pupillenbilder abgedeckt sind.
- Fig.7: zeigt diese zweite Konfiguration der Mikroblendenanordnung.
- Fig. 8: zeigt schematisch die Anordnung der überlagerten drei Mikroblendenraster in der Mikroblendenanordnung und der Piezosteller zur Verstellung der Mikroblendenraster.
- Fig.9: ist eine schematisch-perspektivische Darstellung und veranschaulicht den konstruktiven Aufbau der Mikroblendenanordnung.

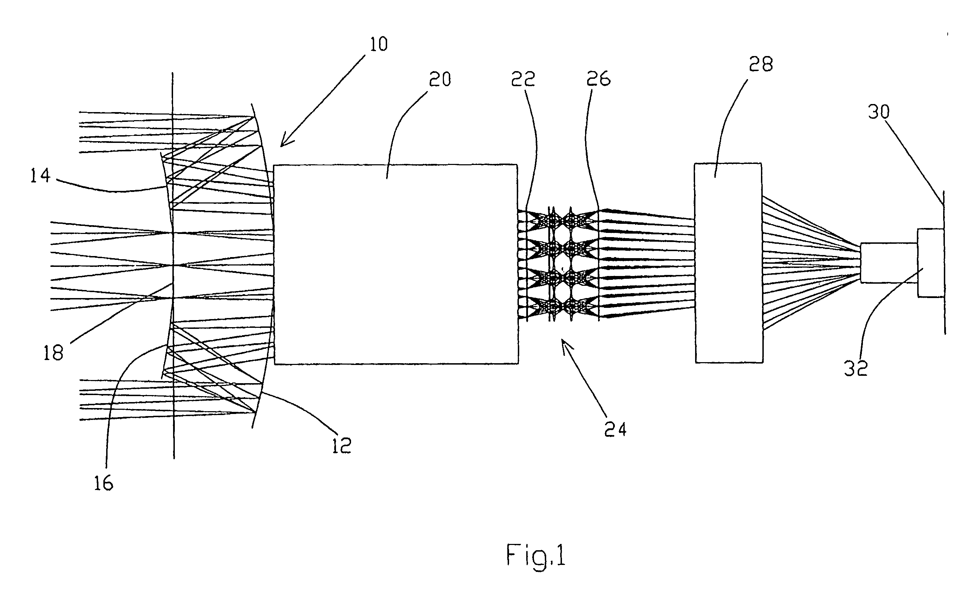

In Fig.1 ist mit 10 generell ein Cassegrainsystem bezeichnet. Das Cassegrainsystem 10 enthält einen ringförmigen Hohlspiegel 12, der einer Objektszene zugewandt ist, und einen konvexen Sekundärspiegel 14, der gleichachsig zu dem Hohlspiegel 12 und diesem zugewandt angeordnet ist. Einfallende Strahlung wird von dem Hohlspiegel 12 erfaßt und auf den Sekundärspiegel 14 reflektiert. Der Sekundärspiegel 14 reflektiert die Strahlung durch den zentralen Durchbruch des ringförmigen Hohlspiegels hindurch. Man erkennt, daß die von dem Hohlspiegel 12 reflektierten Strahlen dabei nur auf den ringförmigen Randbereich 16 des Sekundärspiegels 14 fallen und von diesem reflektiert werden.

Der Mittelbereich 18 des Sekundärspiegels 14 ist für die verwendete Nutzstrahlung, z.B. infrarote Strahlung, durchlässig.

Hinter dem Casegrainsystem ist ein erstes Objektiv 20 angeordnet. Das Objektiv erhält einmal in einem Ringbereich seiner Eintrittspupille die über den Hohlspiegel 12 und den Sekundärspiegel 14 reflektierten Strahlen. Zum anderen erhält das Objektiv 10 in einem mittleren Bereich seiner Eintrittspupille die Strahlen, die gerade durch den durchlässigen Mittelbereich 18 des Sekundärspiegels 14 hindurchgegangen sind. Für die über den Hohlspiegel 12 einfallenden Strahlen bildet der Hohlspiegel 12 eine ringförmige Eintrittspupille des Systems. Für die durch den durchlässigen Mittelbereich 18 des Sekundärspiegels 14 einfallenden Strahlen bildet dieser Mittelbereich 18 eine Eintrittspupille des Systems.

Das erste Objektiv 20 erzeugt in einer ersten Zwischenbildebene 22 überlagerte Bilder einmal des von dem Cassegrainsystem 10 und dem Objektiv 20 beobachteten Gesichtsfeldes und zum anderen des Gesichtsfeldes, das von dem Objekiv 20 allein durch den Mittelbereich 18 hindurch beobachtet wird.

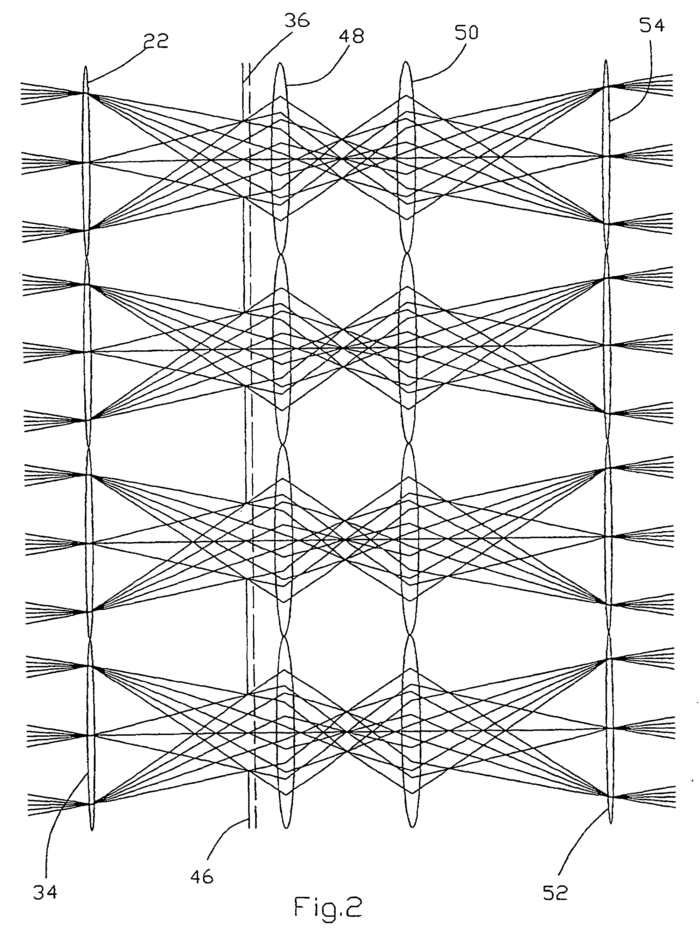

Eine mikrooptische Umschaltvorrichtung, die generell mit 24 bezeichnet und in Fig.2 in vergrößertem Maßstab dargestellt ist, erzeugt in einer zweiten Zwischenbildebene 26 ein verkleinertes Bild jeweils eines der in der ersten Zwischenbildebene 22 überlagerten Gesichtsfeldbilder. Dieses Gesichtsfeldbild wird durch ein zweites Objektiv 28 in einer Bildebene 30 auf einem bildauflösenden Detektor 32, z.B. einem "Focal Plane Array" abgebildet.

Die Umschaltvorrichtung 24 ist in Fig.2 im einzelnen dargestellt.

In der ersten Zwischenbildebene 22 ist ein Mikrofeldlinsenraster 34 angeordnet. Jede Linse des Mikrofeldlinsenrasters 34 bildet die Eintrittspupillen des Cassegrainsystems 10 und der Strahlen, die durch den Mittelbereich 18 treten, als Mikrobilder der Eintrittspupillen in einer Pupillenbildebene 36 ab.

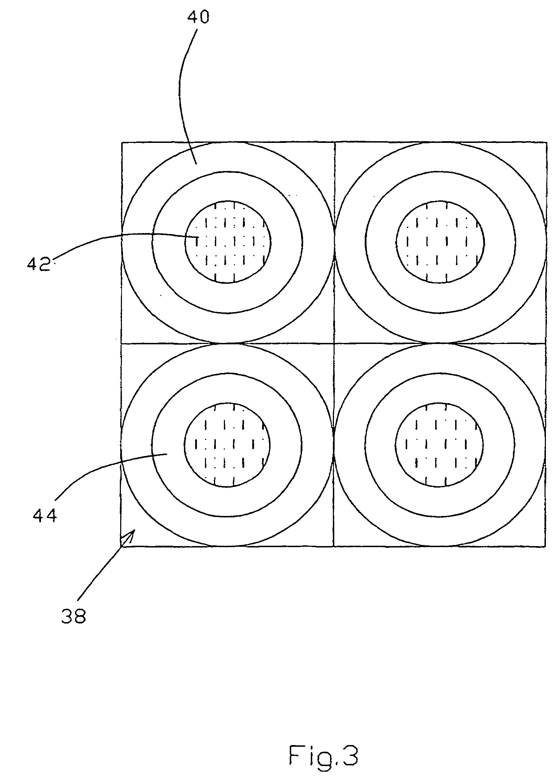

Fig.3 zeigt einen Ausschnitt der Pupillenbildebene 36 mit vier solchen Mikrobildern 38. Jedes Mikrobild 38 zeigt einen äußeren Ring 40, welcher ein Bild der Eintrittspupille des Cassegrainsystems 10 darstellt, und einen zentralen Bereich 42, welcher ein Bild des Mittelbereichs 18 als Eintrittspupille für das zweite Gesichtsfeld ist. Die beiden Pupillenbilder-Bereiche 40 und 42 sind durch einen ringförmigen Bereich 44 getrennt.

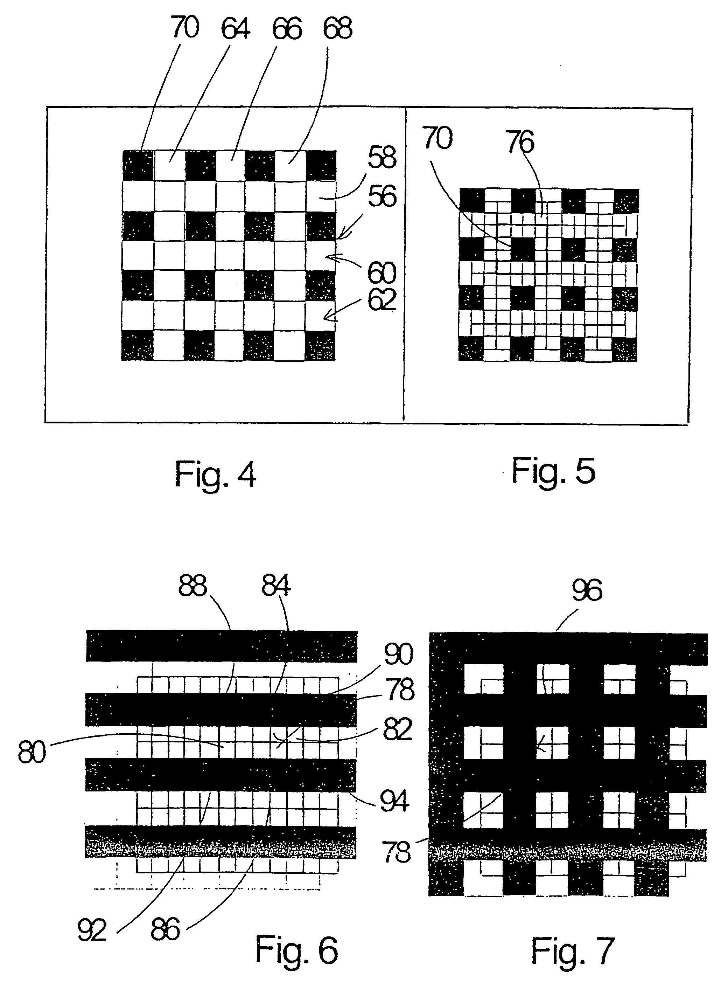

In der Pupillenbildebene 36 ist eine Mikroblendenanordnung 46 angeordnet, welche in jedem der Mikrobilder 38 wahlweise den ringförmigen Bereich 40 oder den zentralen Bereich 42 abdeckt und den jeweils anderen Bereich 42 bzw. 40 freigibt. Eine bevorzugte Ausführung einer solchen Mikroblendenanordnung ist unten unter Bezugnahme auf die Figuren 4 bis 8 beschrieben. Durch diese Abdeckung der Pupillenbilder 40 oder 42 wird erreicht, daß von den beiden in der ersten Zwischenbildebene 22 für die weitere Abbildung nur jeweils die über das Cassegrainsystem 10 laufenden Strahlen oder die durch den Mittelbereich 18 tretenden Strahlen benutzt werden. Die jeweils anderen Strahlen werden mit den Mikrobildern der zugehörigen Eintrittspupille abgedeckt. Die Anordnung gestattet also eine Umschaltung zwischen den beiden Gesichtsfeldern. Es wird jeweils nur eines der Gesichtsfelder durch das zweite Objektiv 28 in der Bildebene 30 abgebildet.

Man erkennt, daß die Strahlen im Bereich der Pupillenbildebene 36 sehr stark divergieren. Es würde Probleme mit sich bringen, diese Strahlen durch das zweite Objektiv 28 ohne Vignettierung zu erfassen. Aus diesem Grunde sind zwei weitere Mikrolinsenraster 48 und 50 vorgesehen. Die Mikrolinsen der beiden Mikrolinsenraster 48 und 50 bilden paarweise Teleskope und bilden das jeweils durch die Mikroblendenanordnung 46 durchgelassene Gesichtsfeldbild aus der ersten Zwischenbildebene 22 verkleinert und aufrecht in einer zweiten Zwischenbildebene 52 ab. In der zweiten Zwischenbildebene 52 ist ein zweites Mikrofeldlinsenraster 54 angeordnet. Das Mikrofeldlinsenraster 54 bildet die Pupillenbilder 38 in der Pupillenbildebene 36 im Unendlichen ab. Das ergibt einen bildseitig telezentrischen Strahlengang.

Das "eingeschaltete" Gesichtsfeldbild aus der zweiten Zwischenbildebene wird von dem zweiten Objektiv 28 in der Bildebene 30 abgebildet. Man erkennt, daß das zweite Objektiv 28 den Abbildungsstrahlengang ohne Probleme erfaßt.

Die Mikroblendenanordnung 46 ist in Fig.4 bis 9 schematisch dargestellt.

Fig.4 zeigt eines von drei kongruenten Mikroblendenrastern 56. Das Mikroblendenraster 56 weist ein Muster von quadratischen Feldern auf. Jede zweite Zeile 58, 60, 62 von quadratischen Feldern ist durchlässig. Ebenso ist jede zweite Spalte 64, 66 und 68 von quadratischen Feldern durchlässig. Dazwischen bleiben undurchlässige Felder 70.

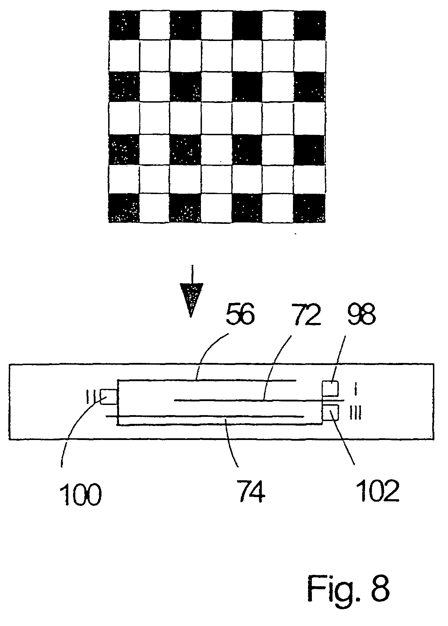

Fig.5 zeigt die drei überlagerten, kongruenten Mikroblendenraster 56, 72 und 74 (Fig. 8) in der Konfiguration, in welcher alle undurchlässigen Felder 70 genau übereinander liegen und alle durchlässigen Felder liegen genau übereinander. Es ergibt sich dann ein Muster, das mit dem Muster von Fig.4 übereinstimmt. In das Muster sind noch Hilfslinien eingezeichnet, welche jedes Feld noch in Viertelfelder unterteilen. Die Viertelfelder bilden einen quadratischen Kranz von durchlässigen Viertelfeldern um jedes undurchlässige Feld 70 herum. In Fig.5 ist ein solcher Kranz in starken Linien dargestellt und mit 76 bezeichnet. Dieser Kranz 76 von durchlässigen Viertelfeldem gibt das ringförmige Mikrobild 40 der Eintrittspupille des Cassegrainsystems 10 frei, während das undurchlässige Feld 70 das zentrale Mikrobild 42 der Eintrittspupille des Mittelbereichs 18 abdeckt.

Fig.6 veranschaulicht für vier Mikrobilder 38, wie die drei Mikroblendenraster 56, 72 und 74 in eine neue Konfiguration verschoben werden, in welcher das ringförmige Mikrobild 40 der Eintrittspupille des Cassegrainsystems abgedeckt wird und das zentrale Mikrobild 42 der Eintrittspupille des durchlässigen Mittelbereichs 18 freigegeben wird.

Es wird ausgegangen von der Konfiguration von Fig.5. In dieser Konfiguration ist das Feld 78 ursprünglich bei allen drei Mikroblendenrastern 56, 72, 74 undurchlässig. Es wird dann das erste Blendenraster um eine Kantenlänge eines Feldes nach links in Fig.6, wie durch den horizontalen Pfeil angedeutet, verschoben. Dann sind die Felder 89 und 82 links und rechts von dem Feld 78 abgedeckt, nämlich einmal durch das vorher auf dem Feld 78 stehende undurchlässige Feld und einmal durch das rechts benachbart davon, ursprünglich durch ein durchlässiges Feld getrennt liegende undurchlässige Feld der gleichen Zeile. Das erste Blendenraster 56 gibt damit das vorher abgedeckte Feld 78 frei und deckt die rechts und links davon liegenden Felder ab. Das Feld 78 ist aber noch durch die Mikroblendenraster 72 und 76 abgedeckt.

Das Mikroblendenraster 72 wird, wie durch einen vertikalen Pfeil angedeutet, um eine Kantenlänge eines Feldes nach oben in Fig.6 verschoben. In dieser Position wird das Feld 72 auch durch das zweite Mikroblendenraster 72 freigegeben. Das vorher auf dem Feld 78 stehende undurchässige Feld des Mikroblendenrasters 72 ist nach oben in Fig.6 in das Feld 84 verschoben. Das mit einem durchlässigen Feld dazwischen in der gleichen Spalte darunter liegende undurchlässige Feld des Mikroblendenrasters 72 ist in eine Position 86 unterhalb des Feldes 78 gerückt. Es wird somit nach dieser Verschiebung das Feld 78 auch durch das zweite Mikroblendenraster 72 freigegeben. Die darüber und darunter liegenden Felder 84 und 86 sind abgedeckt.

Schließlich wird das dritte Mikroblendenraster diagonal um eine der Diagonale eines Feldes entsprechende Strecke verschoben, wie in Fig.6 durch einen diagonalen Pfeil angedeutet ist. Dabei wird ebenfalls das betrachtete Feld 78 freigegeben. Je ein undurchlässiges Feld des dritten Mikroblendenrasters 74 bewegt sich in die Ecken zwischen den angrenzend an Feld 78 abgedeckten Feldern 80, 82, 86 und 86, also auf die Felder 88, 90, 92 und 94. Jetzt ist das Feld 78 von allen drei Mikroblendenrastem 56, 72 und 74 freigegeben. Das nun freie Feld 78 ist allseits von abgedeckten Feldern umgeben.

Diese Konfiguration ist In Fig.7 dargestellt. Das Blendenmuster ist komplementär zu dem Blendenmuster von Fig.5. Es ist jeweils ein zentrales Feld 78 frei, das den in Fig.5 abgedeckten Feldern 70 entspricht. Jedes freie oder durchlässige, zentrale Feld 78 ist umgeben von einem Kranz 96 von undurchlässigen Viertelfeldem. Durch diesen Kranz 96 von undurchlässigen Viertelfeldern wird das Mikrobild 40 der Eintrittspupille des Cassegrainsystems 10 abgedeckt und dafür die Eintrittspupille des durch den durchlässigen Mittelbereich 18 verlaufenden Strahlenganges freigegeben.

Fig.8 veranschaulicht schematisch die Verstellung der drei Mikroblendenraster 56, 72 und 74 durch drei Piezosteller 98, 100 und 102.

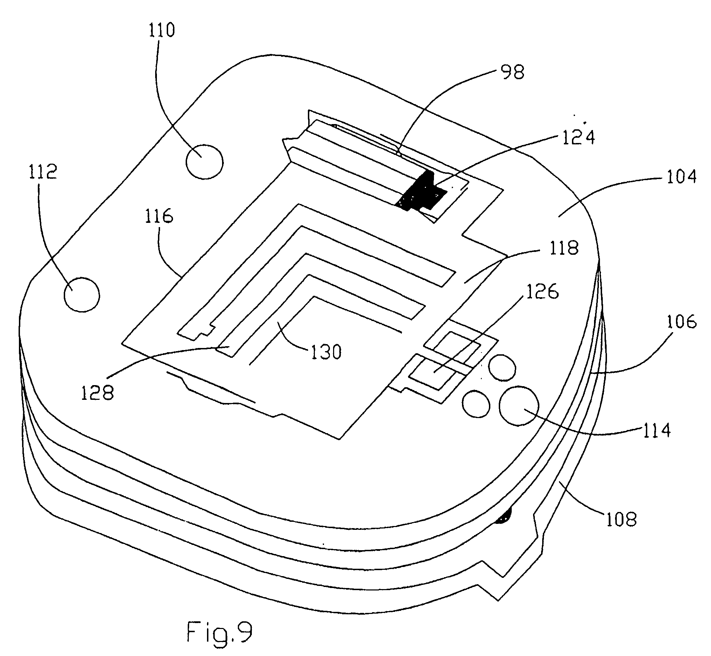

Die konstruktive Ausführung ist in Fig.9 schematisch-perspektivisch in stark vergrößertem Maßstab dargestellt.

Für jedes Mikroblendenraster 56, 72 und 74 ist eine Grundplatte 104, 106 bzw. 108 vorgesehen. Die Grundplatten 104, 106, 108 sind durch Schrauben 110, 112 und 114 miteinander verbunden. Jede Grundplatte 104, 106 und 108 weist einen Durchbruch auf. In Fig.9 ist der Durchbruch 116 der Grundplatte 104 sichtbar. In dem Durchbruch 116 sitzt ein geradgeführter Rahmen 118. Der Rahmen 118 ist von rechts oben nach links unten in Fig.9 beweglich geführt. Der Rahmen 118 ist durch einen Piezosteller 98 verstellbar. Der Piezosteller 98 besteht aus zwei Piezostapeln 120 und 122, die sich an der Grundplatte 104 abstützen. Der Hub der Piezostapel 120 und 122 wird durch ein im einzelnen nicht dargestelltes Übersetzungs- und Umlenkhebelgetriebe 124 auf den Rahmen 118 übertragen. Der Weg des Piezostapels beträgt dabei nur wenige Mikrometer. Auf den Rahmen 118 ist das Mikroblendenraster 56 aufgeklebt, das in Fig.9 der Deutlichkeit halber nicht dargestellt ist. Der Stellweg des Rahmens 118 relativ zu der Grundplatte 104 wird mittels eines kapazitiven Weggebers 126 gemessen. Der Weggeber 126 und der Piezosteller 98 bilden Meßfühler und Stellglied eines -nicht dargestellten-Regelkreises, mittels dessen der Stellweg des Rahmens 118 auf einen vorgegebenen Wert regelbar ist.

In entsprechender Weise ist ein Rahmen 128 relativ zu der Grundplatte 106 und ein Rahmen 130 relativ zu der Grundplatte 108 verstellbar. Der Rahmen 128 trägt das Mikroblendenraster 72, das der Deutlichkeit halber in Fig.9 ebenfalls nicht dargestellt ist, und der Rahmen 130 trägt das (in Fig.9 ebenfalls nicht dargestellte) Mikroblendenraster 74.

## Patentansprüche

1. Optisches System mit umschaltbaren Gesichtsfeldern, wobei jedem Gesichtsfeld eine Eintrittspupille zugeordnet ist, mit optischen Mitteln (10, 20) zur Erzeugung überlagerter Zwischenbilder der Gesichtsfelder in einer Zwischenbildebene (22), **gekennzeichnet durch** ein Mikrofeldlinsenraster (34) in der Zwischenbildebene (22), **durch** welches ein Raster von Mikrobildern (40,42) der Eintrittspupillen in einer Pupillenbildebene (36) erzeugbar ist, eine Mikroblendenanordnung (46) im wesentlichen in der Pupillenbildebene (36), **durch** welche wahlweise jeweils nur eines der Mikrobilder (40,42) der Eintrittspupillen freigebbar ist, und optische Mittel (46,48,28) zur Abbildung der Zwischenbildebene (22) in einer Bildebene (30).

2. Optisches System nach Anspruch 1, **dadurch gekennzeichnet, daß** die Mikroblendenanordnung (46) in der Brennebene des Mikrofeldlinsenrasters (34) angeordnet ist.

3. Optisches System nach Anspruch 1 oder 2, **dadurch gekennzeichnet, daß**
(a) die optischen Mittel als ein Cassegrain-System (10) mit einem ringförmigen Hohlspiegel (12) als Primärspiegel und einem dem Hohlspiegel (12) zugewandten konvexen Sekundärspiegel (14) ausgebildet sind, wobei einfallende Strahlung über den Hohlspiegel (12) auf die Randbereiche (16) des Sekundärspiegels (14) geleitet und von diesem durch eine zentrale Öffnung des Hohlspiegels (12) hindurch reflektiert werden und der Hohlspiegel (12) eine erste Eintrittspupille bildet,
(b) der zentrale Bereich (18) des Sekundärspiegels (14) durchlässig ist und eine zweite Eintrittspupille bildet,
(c) die optischen Mittel weiterhin ein erstes Objektiv (20) enthalten, welches in einer Zwischenbildebene (22) überlagert einmal ein Bild eines ersten Gesichtsfelds mittels der durch den zentralen Bereich (18) des Sekundärspiegels (14) einfallenden Strahlung und zum anderen zusammen mit dem Cassegrainsystem (10) mittels der von dem Cassegrainsystem (10) erfaßten Strahlung ein Bild eines zweiten Gesichtsfeldes erzeugt.

4. Optisches System nach einem der Ansprüche 1 bis 3, **dadurch gekennzeichnet, daß** die Mikroblendenanordnung (46) zum wahlweisen Freigeben nur eines der Mikrobilder (40, 42) eine Mehrzahl von gegeneinander verschiebbaren Blendenrastem (56,72,74) aufweist.

5. Optisches System nach den Ansprüchen 3 und 4, **dadurch gekennzeichnet, daß**
(a) die Mikroblendenanordnung (46) drei Mikroblendenraster (56,72,74) mit kongruente Blendenrastem von gleichmäßig quadratischen Feldern aufweist, von denen jede zweite Zeile und jede zweite Spalte durchlässig und die dazwischen liegenden Felder undurchlässig sind,
(b) in einer ersten Stellung alle drei Blendenraster (56,72,74) in Deckung sind, wobei die undurchlässigen Felder (70) jeweils die Mikrobilder (42) der Eintrittspupille des zweiten Gesichtsfeldes abdecken, und
(c) in zweiten Stellungen ein erstens Blendenraster (56) um die Kantenlänge eines Feldes in einer ersten, zu Kanten der Felder parallelen Richtung ein zweites Blendenraster (72) um die Kantenlänge eines Feldes in einer zu der ersten Richtung senkrechten zweiten Richtung und ein drittes Blendenraster (74) in einer zur Richtung der Diagonalen der Felder parallelen Richtung um eine der Diagonalen eines Feldes entsprechende Strecke verschoben ist, wobei die undurchlässigen Felder aller drei Blendenraster jeweils die Mikrobilder (40) der ringförmigen Eintrittspupille des ersten Gesichtsfeldes abdecken.

6. Optisches System nach Anspruch 4 oder 5, **dadurch gekennzeichnet, daß** bildseitig von der Pupillenbildebene (36) zwei Mikrolinsenraster (46,48) angeordnet sind, deren Mikrolinsen paarweise Teleskope bilden und die Zwischenbildebene (22) auf eine zweite Zwischenbildebene (52) abbilden.

7. Optisches System nach Anspruch 6, **dadurch gekennzeichnet, daß** in der zweiten Zwischenbildebene (52) ein Mikrofeldlinsenraster (54) angeordnet ist, das einen bildseitig telezentrischen Strahlengang bewirkt.

## Claims

1. Optical system with interchangeable fields of view, each field of view being allocated to an entrance pupil, with optical means (10, 20) for the generation of superimposed intermediate images of the fields of view in an intermediate image plane (22) **characterised by** a micro field lens pattern (34) in the intermediate image plane (22), adapted to generate a pattern of micro images (40, 42) in the entrance pupil in a pupil image plane (36), a micro aperture assembly essentially in the pupil image plane (36) by which optionally only one of the micro images (40, 42) of the entrance pupil is passed, and optical means (46, 48, 28) for imaging the intermediate image plane (22) in an image plane (30).

2. Optical system according to claim 1, **characterised in that** the micro aperture assembly (46) is arranged in the focal plane of the micro field lense pattern (34).

3. Optical system according to claim 1 or 2, **characterised in that**
(a) the optical means are a Cassegrain-system (10) with an annular concave mirror (12) as a primary mirror and a convex secondary mirror (14) facing the concave mirror (12), incoming radiation being guided from the concave mirror (12) to the outer areas (16) of the secondary mirror (14) and being reflected through a central opening in the concave mirror (12) by such outer areas, the concave mirror (12) forming a first entrance pupil,
(b) the central area (18) of the secondary mirror (14) is translucent and forms a second entrance pupil,
(c) the optical means furthermore comprise a first objective (20) generating, on one hand, an image of a first field of view by means of radiation entering through the central area (18) of the secondary mirror (14) and on the other hand an image of a second field of view by means of the Cassegrain-system 10 with the radiation detected together with the Cassegrain-system (10) superimposed in an intermediate image plane (22).

4. Optical sytem according to any of claims 1 to 3, **characterised in that** the micro aperture assembly (46) is provided with a plurality of aperture patterns (56, 72, 74) which are arranged to be shifted relative to each other for optionally passing of only one of the micro images (40, 42).

5. Optical system according to any of claims 3 or 4, **characterised in that**
(a) the micro aperture assembly (46) is provided with three micro aperture patterns (56, 72, 74) with congruent aperture patterns of even, square fields, each second line thereof and each second column being transparent and the fields therebetween being opaque,
(b) all three aperture patterns (56, 72, 74) overlapping in a first position, the opaque fields (70) covering the micro images (42) of the entrance pupil of the second field of view, and
(c) a first aperture pattern (56) is shifted in second positions by one side length of a field in a first direction parallel to the sides of the fiels, a second aperture pattern (72) is shifted by one side length of a field in a second direction perpendicular to the first direction and a third aperture pattern (74) is shifted in a direction parallel to the diagonal of the fields by one length corresponding to a diagonal of a field, the opaque fields of all three aperture patterns covering the micro images (40) of the annular entrance pupil of the first field of view.

6. Optical system according to claim 4 or 5, **characterised in that** two micro lens patterns are arranged on the side of the image of the pupil image plane, the paired microlenses thereof forming telescopes and imaging the intermediate image planes (22) into a second intermediate image plane (52).

7. Optical system according to claim 6, **characterised in that** a micro field lens pattern (54) is arranged in the second intermediate image plane (52) effecting a telecentric optical path on the image side.

## Revendications

1. Système optique muni de champs visuels commutables, une pupille d'entrée étant associée à chaque champ visuel, muni de moyens optiques (10,20) destinés à générer les images intermédiaires superposées des champs visuels dans un plan d'image intermédiaire (22), **caractérisé par** un réseau de lentilles de microchamp (34) situé dans le plan d'image intermédiaire (22) permettant de générer un réseau de microimages (40,42) des pupilles d'entrée dans un plan d'image de la pupille (36), une disposition de microdiaphragmes (46) située sensiblement dans le plan d'image de la pupille (36) permettant de libérer au choix à chaque fois une seule microimage (40,42) des pupilles d'entrée, et des moyens optiques (46,48,28) destinés à reproduire le plan d'image intermédiaire (22) dans un plan d'image (30).

2. Système optique selon la revendication 1, **caractérisé en ce que** la disposition de microdiaphragmes (46) est disposée dans le plan focal du réseau de lentilles de microchamp (34).

3. Système optique selon la revendication 1 ou 2, **caractérisé en ce que**
(a) les moyens optiques sont réalisés en système de Cassegrain (10) muni d'un miroir concave annulaire (12), en tant que miroir primaire, et d'un miroir secondaire convexe (14) tourné vers le miroir concave (12), le rayonnement incident étant guidé par l'intermédiaire du miroir concave (12) sur les bords (16) du miroir secondaire (14) et réfléchi par celui-ci en traversant un orifice central du miroir concave (12) et le miroir concave (12) formant une première pupille d'entrée,
(b) la zone centrale (18) du miroir secondaire (14) est perméable et forme une seconde pupille d'entrée,
(c) les moyens optiques comprennent en outre un premier objectif (20) qui génère, d'une part, par superposition dans un plan d'image intermédiaire (22) une image d'un premier champ visuel au moyen du rayonnement incident traversant la zone centrale (18) du miroir secondaire (14) et, d'autre part, conjointement avec le système de Cassegrain (10) une image d'un second champ visuel au moyen du rayonnement détecté par le système de Cassegrain (10).

4. Système optique selon l'une quelconque des revendications 1 à 3, **caractérisé en ce que**, pour libérer au choix une seule microimage (40,42), la disposition de microdiaphragmes (46) présente plusieurs réseaux de diaphragmes (56,72,74) susceptibles de se déplacer les uns par rapport aux autres.

5. Système optique selon les revendications 3 et 4, **caractérisé en ce que**
(a) la disposition de microdiaphragmes (46) présente trois réseaux de microdiaphragmes (56,72,74) munis de réseaux de diaphragmes congrus de champs carrés réguliers dont une ligne sur deux et une colonne sur deux est perméable et les champs se trouvant entre les deux sont imperméables,
(b) dans une première position, les trois réseaux de diaphragmes (56,72,74) sont recouverts, les champs imperméables (70) recouvrant à chaque fois les microimages (42) de la pupille d'entrée du second champ visuel, et
(c) dans une seconde position, un premier réseau de diaphragmes (56) est déplacé le long des arêtes d'un champ dans une première direction parallèle aux arêtes des champs, un deuxième réseau de diaphragmes (72) est déplacé le long des arêtes d'un champ dans une deuxième position perpendiculaire à la première direction et un troisième réseau de diaphragmes (74) est déplacé dans une direction parallèle à la direction de la diagonale des champs le long d'une trajectoire correspondant à la diagonale d'un champ, les champs imperméables des trois réseaux de diaphragmes recouvrant à chaque fois les microimages (40) de la pupille d'entrée annulaire du premier champ visuel.

6. Système optique selon la revendication 4 ou 5, **caractérisé en ce que** deux réseaux de microlentilles (46,48) dont les microlentilles forment par paire des télescopes et reproduisent le plan d'image intermédiaire (22) sur un second plan d'image intermédiaire (52) sont disposés du côté du plan d'image de la pupille (36).

7. Système optique selon la revendication 6, **caractérisé en ce qu'**un réseau de lentilles de microchamp (54) provoquant une marche des rayons télécentrique des deux côtés est disposé dans le second plan d'image intermédiaire (52).
